# EUROPEAN PATENT SPECIFICATION

(11) **EP 3 961 243 B1**
(45) Date of publication and mention of the grant of the patent: **02.09.2026**
(21) Application number: 20796191.3
(22) Date of filing: 02.04.2020
(51) Int. Cl.: G01S 7/02, G01S 13/931, H01Q 3/24, H01Q 21/24, G01S 13/34, G01S 13/02, H01Q 1/32, G01S 13/44, G01S 13/58

(54) **ELECTRONIC APPARATUS, CONTROL METHOD FOR ELECTRONIC APPARATUS, AND CONTROL PROGRAM FOR ELECTRONIC APPARATUS**
ELEKTRONISCHE EINRICHTUNG, STEUERUNGSVERFAHREN FÜR ELEKTRONISCHE EINRICHTUNG UND STEUERUNGSPROGRAMM FÜR ELEKTRONISCHE EINRICHTUNG
APPAREIL ÉLECTRONIQUE, PROCÉDÉ DE COMMANDE D'APPAREIL ÉLECTRONIQUE ET PROGRAMME DE COMMANDE D'APPAREIL ÉLECTRONIQUE

(30) Priority: 25.04.2019 JP 2019084494
(43) Date of publication of application: 02.03.2022
(73) Proprietor: Kyocera Corporation, Kyoto-shi, Kyoto 612-8501 (JP)
(72) Inventor: KAWAJI, Satoshi, Kyoto-shi, Kyoto 612-8501 (JP)
(74) Representative: Viering, Jentschura & Partner mbB Patent- und Rechtsanwälte
(86) International application number: PCT/JP2020/015203
(87) International publication number: WO 2020/217921

(56) References cited:
- WO-A1-2019/125697
- DE-A1- 102017 121 021
- JP-A- 2007 017 356
- JP-A- 2010 014 533
- JP-A- 2011 099 685
- JP-A- H0 357 984
- US-A1- 2017 363 713
- US-A1- 2017 363 713
- US-A1- 2019 187 247

## Description

### Cross-Reference To Related Applications

This application claims priority from Japanese Patent Application No. 2019-84494 filed in Japan on April 25, 2019.

### Technical Field

The present disclosure relates to an electronic device, a method for controlling an electronic device, and a program for controlling an electronic device.

### Background Art

For example, in fields such as automobile-related industries, a technology for measuring a distance or the like between a vehicle of interest and a predetermined object is regarded as important. In recent years, various studies have been conducted particularly on a radar (Radio Detecting and Ranging) technology for measuring a distance or the like to an object such as an obstacle by transmitting a radio wave such as a millimeter wave and receiving a reflected wave reflected off the object. Such a technology for measuring a distance or the like expectedly becomes more important in the future with progresses of a technology for assisting drivers in driving and a technology related to automated driving for partially or entirely automating driving.

It is known that in the above-described radar technology, when a transmission wave is reflected off a particular object, the direction of the plane of polarization (polarization direction) of a radio wave changes. Some techniques using such a property have been proposed. For example, PTL 1 discloses a radar apparatus that receives a second radio wave having a plane of polarization different from a first radio wave that has been transmitted. A radio wave reflector used along with this radar apparatus reflects, as the second radio wave, the first radio wave received from the radar apparatus. For example, PTL 2 discloses a configuration in which a same polarization reflector that reflects an incident first radio wave as a second radio wave and a different polarization reflector that reflects the incident first radio wave as a third radio wave having a plane of polarization changed from that of the first radio wave are alternately arranged. PTL 2 has proposed to virtually make the resolution fine by such a radar transceiver.

US 2017/363713 A1 discloses a radar apparatus, comprising: a long-range transmission antenna unit including one or more long-range transmission array antennae which transmit a first polarized transmission signal; a short-range transmission antenna unit including one or more short-range transmission array antennae which transmit a second polarized transmission signal; a complex array antenna unit which includes one or more complex array antennae receiving a first polarized reception signal and a second polarized reception signal which are received by reflecting the first polarized transmission signal and the second polarized transmission signal from a target; and a signal processing unit which detects the target using the first polarized reception signal and the second polarized reception signal, wherein the first polarized reception signal has a cross polarization characteristic with respect to the second polarized reception signal.

WO 2019/125697 A1, which falls under Art. 54(3) EPC and is thus not relevant to the question of inventive step, discloses a radar unit comprising: a plurality of transmission antennas, wherein the plurality of transmission antennas includes respective transmission antennas configured to transmit in one of four polarizations; and a plurality of reception antennas, wherein the plurality of reception antennas includes respective reception antennas configured to receive radar signals from one of the four polarizations.

### Citation List

### Patent Literature

PTL 1: Japanese Unexamined Patent Application Publication No. 2006-133108
PTL 2: Japanese Unexamined Patent Application Publication No. 2007-17356

### Summary of Invention

The present invention provides an electronic device according to claim 1, a method for controlling an electronic device according to claim 7, and a program for controlling an electronic device according to claim 8**.** Further embodiments of the present invention are disclosed in the dependent claims.

### Brief Description of Drawings

[Fig. 1] Fig. 1 is a diagram for describing how an electronic device according to one embodiment is used.
[Fig. 2] Fig. 2 is a functional block diagram schematically illustrating a configuration of the electronic device according to the one embodiment.
[Fig. 3] Fig. 3 is a diagram for describing a configuration of a transmission signal according to the one embodiment.
[Fig. 4] Fig. 4 is a diagram illustrating an example of arrangement of transmission antennas and reception antennas of an electronic device to be compared with the electronic device according to the one embodiment.
[Fig. 5] Fig. 5 is a diagram illustrating an example of a configuration of transmission antennas and reception antennas of the electronic device according to the one embodiment.
[Fig. 6] Fig. 6 is a diagram illustrating another example of the configuration of the transmission antennas and the reception antennas of the electronic device according to the one embodiment.
[Fig. 7] Fig. 7 is a diagram for describing switching of the transmission antennas in the electronic device according to the one embodiment.
[Fig. 8] Fig. 8 is a diagram illustrating an example of detection of an object performed by the electronic device according to the one embodiment.
[Fig. 9] Fig. 9 is a flowchart for describing an operation of the electronic device according to the one embodiment.
[Fig. 10] Fig. 10 is a conceptual diagram for describing spatial arrangement of the antennas of the electronic device according to the one embodiment.

### Description of Embodiments

The detection accuracy is desirably improved in a technology for detecting a predetermined object by receiving a reflected wave that is a transmitted transmission wave reflected off the object. An object of the present disclosure is to provide an electronic device, a method for controlling an electronic device, and a program for controlling an electronic device that contribute to improvement of the object detection accuracy. According to one embodiment, an electronic device, a method for controlling an electronic device, and a program for controlling an electronic device that contribute to improvement of the object detection accuracy can be provided. One embodiment is described in detail below with reference with the drawings.

An electronic device according to one embodiment is mounted in a vehicle (mobility device) such as an automobile, for example, and thus is capable of detecting a predetermined object located around the mobility device. To this end, the electronic device according to the one embodiment is capable of transmitting a transmission wave to an area around the mobility device from a transmission antenna installed on the mobility device. The electronic device according to the one embodiment is also capable of receiving a reflected wave that is the reflected transmission wave, from a reception antenna installed on the mobility device. At least one of the transmission antenna and the reception antenna is included in a radar sensor or the like installed on the mobility device, for example.

A configuration in which the electronic device according to the one embodiment is mounted in an automobile such as a passenger car is described below as a typical example. However, the mobility device in which the electronic device according to the one embodiment is mounted is not limited to an automobile. The electronic device according to the one embodiment may be mounted in various mobility devices such as a bus, a track, a motorcycle, a bicycle, a ship, an aircraft, a farm vehicle such as a tractor, a snowplow, a garbage truck, a police car, an ambulance, and a drone. The mobility device in which the electronic device according to the one embodiment is mounted is not necessarily limited to a mobility device that moves by its own motive power. For example, the mobility device in which the electronic device according to the one embodiment is mounted may be a trailer towed by a tractor. The electronic device according to the one embodiment is capable of measuring a distance or the like between the sensor and a predetermined object when at least one of the sensor and the object is movable. The electronic device according to the one embodiment is also capable of measuring the distance or the like between the sensor and the object even when both the sensor and the object are stationary.

An example of how the electronic device according to the one embodiment detects an object is described first.

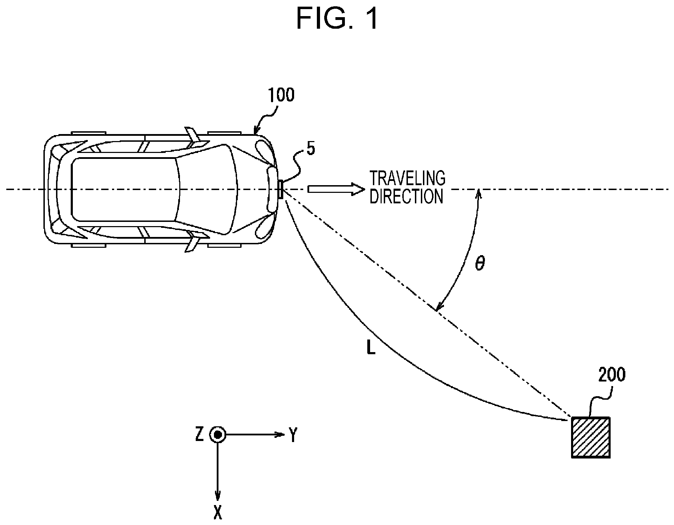

Fig. 1 is a diagram for describing how the electronic device according to the one embodiment is used. Fig. 1 illustrates an example in which a sensor including a transmission antenna and a reception antenna according to the one embodiment is installed on a mobility device.

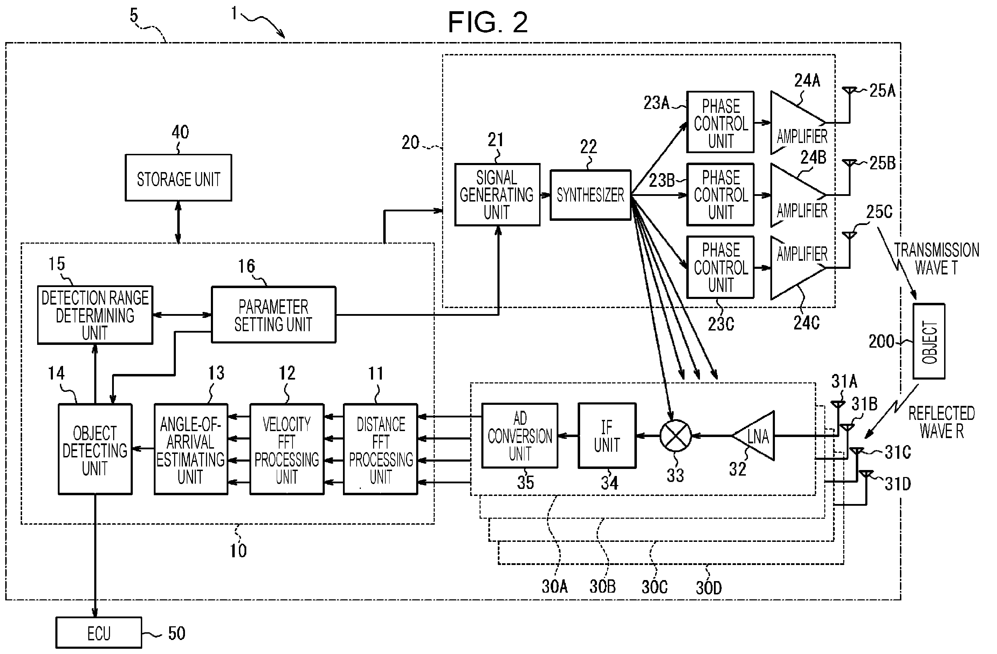

A sensor 5 including a transmission antenna and a reception antenna according to the one embodiment is installed on a mobility device 100 illustrated in Fig. 1. It is assumed that an electronic device 1 according to the one embodiment is also mounted (for example, built) in the mobility device 100 illustrated in Fig. 1. A specific configuration of the electronic device 1 is described later. The sensor 5 includes at least one of the transmission antenna and the reception. The sensor 5 may also appropriately include at least any of other functional units, such as at least part of a control unit 10 (Fig. 2) included in the electronic device 1. The mobility device 100 illustrated in Fig. 1 may be an automotive vehicle such as a passenger car but may be a mobility device of any type. In Fig. 1, the mobility device 100 may move (travel or slowly travel), for example, in a positive Y-axis direction (traveling direction) illustrated in Fig. 1 or in another direction, or may be stationary without moving.

As illustrated in Fig. 1, the sensor 5 including the transmission antenna is installed on the mobility device 100. In the example illustrated in Fig. 1, only one sensor 5 including the transmission antenna and the reception antenna is installed at a front portion of the mobility device 100. The position where the sensor 5 is installed on the mobility device 100 is not limited to the position illustrated in Fig. 1 and may be another appropriate position. For example, the sensor 5 illustrated in Fig. 1 may be installed on a left side, on a right side, and/or on a rear side of the mobility device 100. The number of such sensors 5 may be any number equal to or greater than 1 depending on various conditions (or requirements) such as a range and/or an accuracy of measurement performed by the mobility device 100. The sensor 5 may be installed inside the mobility device 100. The inside the mobility device 100 may be, for example, a space inside a bumper, a space inside a body, a space inside a headlight, or a space such as a driver's space.

The sensor 5 transmits an electromagnetic wave as a transmission wave from the transmission antenna. For example, when a predetermined object (for example, an object 200 illustrated in Fig. 1) is located around the mobility device 100, at least part of the transmission wave transmitted from the sensor 5 is reflected off the object to become a reflected wave. For example, the reception antenna of the sensor 5 receives such a reflected wave. In this manner, the electronic device 1 mounted in the mobility device 100 can detect the object.

The sensor 5 including the transmission antenna is a radar (Radio Detecting and Ranging) sensor that transmits and receives a radio wave. However, the sensor 5 is not limited to a radar sensor. The sensor 5 according to the one embodiment may be, for example, a sensor based on the LIDAR (Light Detection and Ranging, Laser Imaging Detection and Ranging) technology that uses an optical wave. Each of these sensors can include, for example, a patch antenna. Since the technologies such as RADAR and LIDAR are already known, detailed description may be appropriately simplified or omitted.

The electronic device 1 mounted in the mobility device 100 illustrated in Fig. 1 receives, from the reception antenna, the reflected wave of the transmission wave transmitted from the transmission antenna of the sensor 5. In this manner, the electronic device 1 can detect the predetermined object 200 located within a predetermined distance from the mobility device 100. For example, as illustrated in Fig. 1, the electronic device 1 can measure a distance L between the mobility device 100, which is a vehicle of interest, and the predetermined object 200. The electronic device 1 can also measure a relative velocity between the mobility device 100, which is the vehicle of interest, and the predetermined object 200. The electronic device 1 can further measure a direction (an angle of arrival θ) from which the reflected wave from the predetermined object 200 arrives at the mobility device 100, which is the vehicle of interest.

The object 200 may be, for example, at least any of an oncoming automobile traveling in a lane adjacent to a lane of the mobility device 100, an automobile traveling side by side with the mobility device 100, an automobile traveling in front of or behind the mobility device 100 in the same lane, and the like. The object 200 may also be any object located around the mobility device 100, such as a motorcycle, a bicycle, a stroller, a person such as a pedestrian, an animal, an insect, other forms of life, a guardrail, a median strip, a road sign, a step on a sidewalk, a wall, or an obstacle. The object 200 may be in motion or stationary. For example, the object 200 may be an automobile or the like that is parked or stationary around the mobility device 100.

In Fig. 1, a ratio between a size of the sensor 5 and a size of the mobility device 100 does not necessarily indicate an actual ratio. Fig. 1 illustrates the sensor 5 installed on an outer portion of the mobility device 100. However, in the one embodiment, the sensor 5 may be installed at various positions of the mobility device 100. For example, in one embodiment, the sensor 5 may be installed inside a bumper of the mobility device 100 so as not to be seen in the appearance of the mobility device 100.

Description is given below on the assumption that the transmission antenna of the sensor 5 transmits a radio wave in a frequency band, such as a millimeter wave (equal to or higher than 30 GHz) or a quasi-millimeter wave (for example, around 20 GHz to 30 GHz) as a typical example. For example, the transmission antenna of the sensor 5 may transmit a radio wave having a frequency bandwidth of 4 GHz such as from 77 GHz to 81 GHz.

Fig. 2 is a functional block diagram schematically illustrating an example of a configuration of the electronic device 1 according to the one embodiment. An example of the configuration of the electronic device 1 according to the one embodiment is described below.

When a distance or the like is measured by using a millimeter-wave radar, a frequency-modulated continuous wave radar (hereinafter, referred to as an FMCW radar) is often used. The FMCW radar sweeps a frequency of a to-be-transmitted radio wave to generate a transmission signal. Thus, a frequency of the radio wave used by such a millimeter-wave FMCW radar, which uses a radio wave of a frequency band of 79 GHz, for example, is in a frequency bandwidth of 4 GHz such as from 77 GHz to 81 GHz, for example. The radar of the frequency bandwidth of 79 GHz has a characteristic that the usable frequency bandwidth is wider than another millimeter-wave and/or quasi-millimeter-wave radar of a frequency band of 24 GHz, 60 GHz, or 76 GHz, for example. Such an embodiment is described below.

As illustrated in Fig. 2, the electronic device 1 according to the one embodiment is constituted by the sensor 5 and an ECU (Electronic Control Unit) 50. The ECU 50 controls various operations of the mobility device 100. The ECU 50 may be constituted by at least one or more ECUs. The electronic device 1 according to the one embodiment includes the control unit 10. The electronic device 1 according to the one embodiment may also appropriately include another functional unit such as at least any of a transmission unit 20, reception units 30A to 30D, and a storage unit 40. As illustrated in Fig. 2, the electronic device 1 includes a plurality of reception units such as the reception units 30A to 30D. When the reception units 30A, 30B, 30C, and 30D are not distinguished from one another, the reception units 30A, 30B, 30C, and 30D are simply referred to as "reception units 30" below.

The control unit 10 may include a distance FFT processing unit 11, a velocity FFT processing unit 12, an angle-of-arrival estimating unit 13, an object detecting unit 14, a detection range determining unit 15, and a parameter setting unit 16. These functional units included in the control unit 10 are further described later.

As illustrated in Fig. 2, the transmission unit 20 may include a signal generating unit 21, a synthesizer 22, phase control units 23A, 23B, and 23C, amplifiers 24A, 24B, and 24C, and transmission antennas 25A, 25B, and 25C. When the phase control units 23A, 23B, and 23C are not distinguished from one another, the phase control units 23A, 23B, and 23C are simply referred to as "phase control units 23" below. When the amplifiers 24A, 24B, and 24C are not distinguished from one another, the amplifiers 24A, 24B, and 24C are simply referred to as "amplifiers 24" below. When the transmission antennas 25A, 25B, and 25C are not distinguished from one another, the transmission antennas 25A, 25B, and 25C are simply referred to as "transmission antennas 25" below.

As illustrated in Fig. 2, each of the reception units 30 includes a respective one of reception antennas 31A to 31D. When the reception antennas 31A, 31B, 31C, and 31D are not distinguished from one another, the reception antennas 31A, 31B, 31C, and 31D are simply referred to as "reception antennas 31" below. As illustrated in Fig. 2, each of the plurality of reception units 30 may include an LNA 32, a mixer 33, an IF unit 34, and an AD conversion unit 35. The reception units 30A to 30D may have the same and/or similar configuration. Fig. 2 schematically illustrates the configuration of only the reception unit 30A as a representative example.

The sensor 5 described above includes the transmission antennas 25 and the reception antennas 31. The sensor 5 may also appropriately include at least any of other functional units such as the control unit 10.

The control unit 10 included in the electronic device 1 according to the one embodiment is capable of controlling various functional units of the electronic device 1 and also controlling operations of the entire electronic device 1. To provide control and processing capabilities for executing various functions, the control unit 10 may include at least one processor, for example, a CPU (Central Processing Unit). The control unit 10 may be collectively implemented by one processor, may be implemented by some processors, or may be implemented discrete individual processors. The processor may be implemented as one IC. The IC is also referred to as an integrated circuit. The processor may be implemented as a plurality of ICs and discrete circuits connected to be able to perform communication. The processor may be implemented on the basis of various other known technologies. In the one embodiment, the control unit 10 may be configured as, for example, a CPU and a program executed by the CPU. The control unit 10 may appropriately include a memory required for operations of the control unit 10.

The storage unit 40 may store a program executed by the control unit 10, a result of processing performed by the control unit 10, etc. The storage unit 40 may function as a work memory of the control unit 10. The storage unit 40 may be constituted, for example, by a semiconductor memory, a magnetic disk, or the like. However, the storage unit 40 is not limited to these, and can be any storage device. The storage unit 40 may be, for example, a storage medium such as a memory card inserted to the electronic device 1 according to the present embodiment. The storage unit 40 may be an internal memory of the CPU used as the control unit 10 as described above.

In the one embodiment, the storage unit 40 may store various parameters for setting a range in which an object is detected on the basis of a transmission wave T transmitted from each transmission antenna 25 and a reflected wave R received from each reception antenna 31. Such parameters are further described later.

In the electronic device 1 according to the one embodiment, the control unit 10 is capable of controlling at least one of the transmission unit 20 and the reception units 30. In this case, the control unit 10 may control at least one of the transmission unit 20 and the reception units 30 on the basis of various kinds of information stored in the storage unit 40. In the electronic device 1 according to the one embodiment, the control unit 10 may instruct the signal generating unit 21 to generate a signal or may control the signal generating unit 21 to generate a signal.

In accordance with control performed by the control unit 10, the signal generating unit 21 generates a signal (transmission signal) to be transmitted as the transmission wave T from each transmission antenna 25. When generating the transmission signal, the signal generating unit 21 may allocate a frequency of the transmission signal in accordance with control performed by the control unit 10, for example. Specifically, the signal generating unit 21 may allocate a frequency of the transmission signal in accordance with a parameter set by the parameter setting unit 16. For example, the signal generating unit 21 receives frequency information from the control unit 10 (the parameter setting unit 16) and generates a signal having a predetermined frequency in a frequency band such as from 77 GHz to 81 GHz, for example. The signal generating unit 21 may include a functional unit such as a voltage control oscillator (VCO), for example.

The signal generating unit 21 may be configured as hardware having the function, as a microcomputer for example, or as a processor such as a CPU and a program or the like executed by the processor for example. Each functional unit described below may also be configured as hardware having the function, as a microcomputer for example if possible, or as a processor such as a CPU and a program or the like executed by the processor for example.

In the electronic device 1 according to the one embodiment, the signal generating unit 21 may generate a transmission signal such as a chirp signal (transmission chirp signal), for example. In particular, the signal generating unit 21 may generate a signal (linear chirp signal) whose frequency changes linearly and periodically. For example, the signal generating unit 21 may generate a chirp signal whose frequency linearly and periodically increases from 77 GHz to 81 GHz as time elapses. For example, the signal generating unit 21 may generate a signal whose frequency periodically repeats a linear increase (up-chirp) from 77 GHz to 81 GHz and a decrease (down-chirp) as time elapses. The signal to be generated by the signal generating unit 21 may be set in advance by the control unit 10, for example. The signal generated by the signal generating unit 21 may be stored in advance in the storage unit 40 or the like, for example. Since chirp signals used in a technical field such as a radar are known, more detailed description is appropriately simplified or omitted. The signal generated by the signal generating unit 21 is supplied to the synthesizer 22.

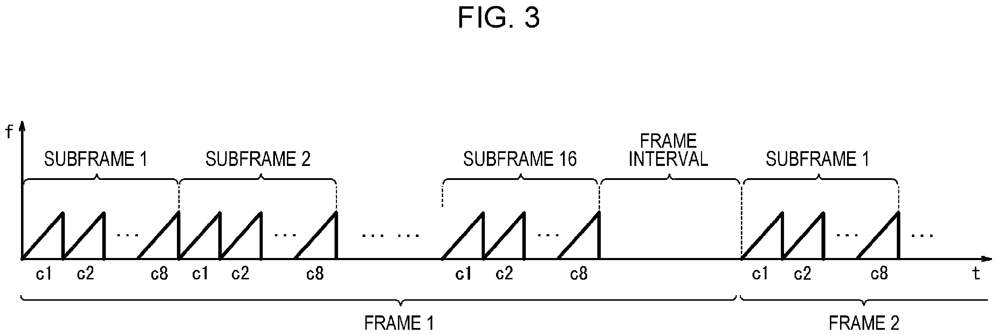

Fig. 3 is a diagram for describing an example of chirp signals generated by the signal generating unit 21.

In Fig. 3, the horizontal axis represents the elapsed time and the vertical axis represents the frequency. In the example illustrated in Fig. 3, the signal generating unit 21 generates linear chirp signals whose frequency linearly changes periodically. In Fig. 3, the individual chirp signals are denoted by c1, c2, ..., c8. As illustrated in Fig. 3, the frequency of each chirp signal linearly increases as time elapses.

In the example illustrated in Fig. 3, eight chirp signals c1, c2, ..., c8 constitute one subframe. That is, each of subframes such as a subframe 1 and a subframe 2 illustrated in Fig. 3 includes eight chirp signals c1, c2, ..., c8. In the example illustrated in Fig. 3, 16 subframes such as the subframes 1 to 16 constitute one frame. That is, each of frames such as a frame 1 and a frame 2 illustrated in Fig. 3 includes 16 subframes. As illustrated in Fig. 3, a frame interval of a predetermined length may be included between frames. One frame illustrated in Fig. 3 may have a length of about 30 ms to 50 ms, for example.

In Fig. 3, the frame 2 and subsequent frames may have the same and/or similar configuration. In Fig. 3, the frame 3 and subsequent frames may have the same and/or similar configuration. In the electronic device 1 according to the one embodiment, the signal generating unit 21 may generate a transmission signal as any number of frames. In Fig. 3, an illustration of some chirp signals is omitted. As described above, a relationship between time and a frequency of the transmission signal generated by the signal generating unit 21 may be stored in the storage unit 40 or the like, for example.

As described above, the electronic device 1 according to the one embodiment may transmit a transmission signal constituted by subframes each including a plurality of chirp signals. The electronic device 1 according to the one embodiment may transmit a transmission signal constituted by frames each including a predetermined number of subframes.

Description is given below on the assumption that the electronic device 1 transmits a transmission signal having a frame structure illustrated in Fig. 3. However, the frame structure illustrated in Fig. 3 is an example. For example, the number of chirp signals included in one subframe is not limited to eight. In the one embodiment, the signal generating unit 21 may generate a subframe including any number (for example, a plurality) of chirp signals. A subframe structure illustrated in Fig. 3 is also an example. For example, the number of subframes included in one frame is not limited to 16. In the one embodiment, the signal generating unit 21 may generate a frame including any number (for example, a plurality) of subframes. The signal generating unit 21 may generate signals having different frequencies. The signal generating unit 21 may generate a plurality of discrete signals of bandwidths in which frequencies f are different from each other.

Referring back to Fig. 2, the synthesizer 22 increases the frequency of the signal generated by the signal generating unit 21 to a frequency in a predetermined frequency band. The synthesizer 22 may increase the frequency of the signal generated by the signal generating unit 21 to a frequency selected as a frequency of the transmission wave T to be transmitted from each transmission antenna 25. The frequency selected as the frequency of the transmission wave T to be transmitted from each transmission antenna 25 may be set by the control unit 10, for example. For example, the frequency selected as the frequency of the transmission wave T to be transmitted from each transmission antenna 25 may be a frequency selected by the parameter setting unit 16. The frequency selected as the frequency of the transmission wave T to be transmitted from each transmission antenna 25 may be stored in the storage unit 40, for example. The signal whose frequency has been increased by the synthesizer 22 is supplied to the phase control unit 23 and the mixer 33. When the plurality of phase control units 23 are present, the signal whose frequency has been increased by the synthesizer 22 may be supplied to each of the plurality of phase control units 23. When the plurality of reception units 30 are present, the signal whose frequency has been increased by the synthesizer 22 may be supplied to each of the mixers 33 of the plurality of reception units 30.

Each of the phase control units 23 controls a phase of the transmission signal supplied from the synthesizer 22. Specifically, for example, in accordance with control performed by the control unit 10, each of the phase control units 23 may appropriately advance or delay the phase of the signal supplied from the synthesizer 22 to adjust the phase of the transmission signal. In this case, on the basis of a difference between paths of the transmission waves T to be transmitted from the plurality of transmission antennas 25, the phase control units 23 may adjust the phases of the respective transmission signals. The phase control units 23 appropriately adjust the phases of the respective transmission signals. Consequently, the transmission waves T transmitted from the plurality of transmission antennas 25 enhance with each other in a predetermined direction to form a beam (beamforming). In this case, a correlation between a direction of beamforming and amounts of phase by which the respective transmission signals transmitted by the plurality of transmission antennas 25 are controlled may be stored in the storage unit 40, for example. The transmission signal whose phase is controlled by each of the phase control units 23 is supplied to a respective one of the amplifiers 24.

The amplifier 24 amplifies power (electric power) of the transmission signal supplied from the phase control unit 23 in accordance with control performed by the control unit 10, for example. When the sensor 5 includes the plurality of transmission antennas 25, each of the plurality of amplifiers 24 may amplify power (electric power) of the transmission signal supplied from a respective one of the plurality of phase control units 23 in accordance with control performed by the control unit 10, for example. Since the technology for amplifying power of a transmission signal is already known, more detailed description is omitted. Each of the amplifiers 24 is connected to a respective one of the transmission antennas 25.

The transmission antenna 25 outputs (transmits), as the transmission wave T, the transmission signal amplified by the amplifier 24. When the sensor 5 includes the plurality of transmission antennas 25, each of the plurality of transmission antennas 25 may output (transmit), as the transmission wave T, the transmission signal amplified by a respective one of the plurality of amplifiers 24. Since the transmission antennas 25 can be configured in a manner that is the same as and/or similar to the manner of transmission antennas for use in the known radar technology, more detailed description is omitted.

The electronic device 1 according to the one embodiment, which includes the transmission antennas 25, is capable of transmitting transmission signals (for example, transmission chirp signals) as the transmission waves T from the respective transmission antennas 25 in this manner. At least one of the functional units constituting the electronic device 1 may be housed in one housing. In this case, the one housing may have a hard-to-open structure. For example, the transmission antennas 25, the reception antennas 31, and the amplifiers 24 are desirably housed in one housing, and this housing desirably has a hard-to-open structure. When the sensor 5 is installed on the mobility device 100 such as an automobile, each of the transmission antennas 25 may transmit the transmission wave T to outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. The transmission antennas 25 are covered with a member such as the radar cover, so that a risk of the transmission antennas 25 being damaged or malfunctioning because of a contact with an external object can be reduced. The radar cover and the housing may also be referred to as a radome.

Fig. 2 illustrates an example in which the electronic device 1 includes three transmission antennas 25. However, the electronic device 1 includes any number of transmission antennas 25. On the other hand, in the one embodiment, the electronic device 1 may include the plurality of transmission antennas 25 in the case where the transmission waves T transmitted from the respective transmission antennas 25 form a beam in a predetermined direction. In the one embodiment, the electronic device 1 may include the plurality of phase control units 23 and the plurality of amplifiers 24 to correspond to the plurality of transmission antennas 25. Each of the plurality of phase control units 23 may control the phase of a respective one of the plurality of transmission waves supplied from the synthesizer 22 and to be transmitted from the plurality of transmission antennas 25. Each of the plurality of amplifiers 24 may amplify power of a respective one of the plurality of transmission signals to be transmitted from the plurality of transmission antennas 25. In this case, the sensor 5 may include the plurality of transmission antennas. As described above, when the electronic device 1 illustrated Fig. 2 includes the plurality of transmission antennas 25, the electronic device 1 may include a plurality of functional units necessary for transmitting the transmission waves T from the plurality of transmission antennas 25.

The reception antenna 31 receives the reflected wave R. The reflected wave R is the transmission wave T reflected off the predetermined object 200. As the reception antenna 31, a plurality of antennas such as the reception antennas 31A to 31D, for example, may be included. Since the reception antennas 31 can be configured in a manner that is the same as and/or similar to the manner of reception antennas for use in the known radar technology, more detailed description is omitted. Each of the reception antennas 31 is connected to the LNA 32. A reception signal based on the reflected wave R received by each of the reception antennas 31 is supplied to the LNA 32.

The electronic device 1 according to the one embodiment can receive, from each of the plurality of reception antennas 31, the reflected wave R that is the transmission wave T that has been transmitted as the transmission signal such as a chirp signal (transmission chirp signal), for example, and has been reflected off the predetermined object 200. When the transmission chirp signal is transmitted as the transmission wave T in this manner, the reception signal based on the received reflected wave R is referred to as a reception chirp signal. That is, the electronic device 1 receives the reception signal (for example, the reception chirp signal) as the reflected wave R from each of the reception antennas 31. When the sensor 5 is installed on the mobility device 100 such as an automobile, each of the reception antennas 31 may receive the reflected wave R from outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. The reception antennas 31 are covered with a member such as the radar cover, so that a risk of the reception antennas 31 being damaged or malfunctioning because of a contact with an external object can be reduced. The radar cover and the housing may also be referred to as a radome.

When the reception antennas 31 are installed near the transmission antennas 25, these may be collectively included in one sensor 5. That is, one sensor 5 includes at least one transmission antenna 25 and at least one reception antenna 31. One sensor 5 includes the plurality of transmission antennas 25 and the plurality of reception antennas 31. In such a case, one radar sensor may be covered with a cover member such as one radar cover, for example.

The LNA 32 amplifies, with low noise, the reception signal based on the reflected wave R received by a respective one of the reception antennas 31. The LNA 32 may be a low-noise amplifier and amplifies, with low noise, the reception signal supplied from a respective one of the reception antennas 31. The reception signal amplified by the LNA 32 is supplied to the mixer 33.

The mixer 33 mixes (multiplies) the reception signal having an RF frequency supplied from the LNA 32 and the transmission signal supplied from the synthesizer 22 to generate a beat signal. The beat signal obtained by the mixer 33 through mixing is supplied to the IF unit 34.

The IF unit 34 performs frequency conversion on the beat signal supplied from the mixer 33 to reduce the frequency of the beat signal to an intermediate frequency (IF). The beat signal whose frequency has been reduced by the IF unit 34 is supplied to the AD conversion unit 35.

The AD conversion unit 35 digitizes the analog beat signal supplied from the IF unit 34. The AD conversion unit 35 may be constituted by any analog-to-digital conversion circuit (Analog to Digital Converter (ADC)). The digitized beat signal obtained by the AD conversion unit 35 is supplied to the distance FFT processing unit 11 of the control unit 10. In the case where the plurality of reception units 30 are present, the beat signals each digitized by a respective one of the plurality of AD conversion units 35 may be supplied to the distance FFT processing unit 11.

The distance FFT processing unit 11 estimates a distance between the mobility device 100 equipped with the electronic device 1 and the object 200 on the basis of the beat signals supplied from the respective AD conversion units 35. The distance FFT processing unit 11 may include a processing unit that performs fast Fourier transform, for example. In this case, the distance FFT processing unit 11 may be configured as any circuit, any chip, or the like that performs fast Fourier transform (FFT) processing.

The distance FFT processing unit 11 performs FFT processing (hereinafter, appropriately referred to as "distance FFT processing") on the beat signal that has been digitized by each of the AD conversion units 35. For example, the distance FFT processing unit 11 may perform the FFT processing on a complex signal supplied from each of the AD conversion units 35. The beat signal that has been digitized by each of the AD conversion units 35 can be represented as a temporal change in signal intensity (power). The distance FFT processing unit 11 performs FFT processing on such a beat signal, so that the beat signal can be represented as signal intensity (power) for each frequency. If a peak in a result obtained by the distance FFT processing is equal to or greater than a predetermined threshold, the distance FFT processing unit 11 may determine that the predetermined object 200 is located at the distance corresponding to the peak. For example, a method for determining that there is an object (reflecting object) that reflects a transmission wave when a peak value that is equal to or greater than a threshold is detected from the average power or amplitude of a disturbance signal, such as a constant false alarm rate (CFAR) detection process, is known.

As described above, the electronic device 1 according to the one embodiment can detect the object 200 that reflects the transmission wave T on the basis of the transmission signal transmitted as the transmission wave T and the reception signal received as the reflected wave R.

The distance FFT processing unit 11 can estimate a distance to a predetermined object on the basis of one chirp signal (for example, c1 illustrated in Fig. 3). That is, the electronic device 1 can measure (estimate) the distance L illustrated in Fig. 1 by performing the distance FFT processing. Since a technique for measuring (estimating) a distance to a predetermined object by performing FFT processing on a beat signal is known, more detailed description is appropriately simplified or omitted. Results (for example, distance information) of the distance FFT processing performed by the distance FFT processing unit 11 may be supplied to the velocity FFT processing unit 12. The results of the distance FFT processing performed by the distance FFT processing unit 11 may also be supplied to the object detecting unit 14.

The velocity FFT processing unit 12 estimates a relative velocity between the mobility device 100 equipped with the electronic device 1 and the object 200 on the basis of the beat signals on which the distance FFT processing has been performed by the distance FFT processing unit 11. The velocity FFT processing unit 12 may include a processing unit that performs fast Fourier transform, for example. In this case, the velocity FFT processing unit 12 may be configured by any circuit, any chip, or the like that performs fast Fourier transform (FFT) processing.

The velocity FFT processing unit 12 further performs FFT processing (hereinafter, appropriately referred to as "velocity FFT processing") on each beat signal on which the distance FFT processing has been performed by the distance FFT processing unit 11. For example, the velocity FFT processing unit 12 may perform the FFT processing on each complex signal supplied from the distance FFT processing unit 11. The velocity FFT processing unit 12 can estimate a relative velocity to the predetermined object on the basis of a subframe (for example, the subframe 1 illustrated in Fig. 3) including chirp signals. When the distance FFT processing is performed on the beat signal in the above-described manner, a plurality of vectors can be generated. The velocity FFT processing unit 12 can estimate a relative velocity to the predetermined object by determining a phase of a peak in a result of the velocity FFT processing performed on the plurality of vectors. That is, the electronic device 1 can measure (estimate) a relative velocity between the mobility device 100 and the predetermined object 200 illustrated in Fig. 1 by performing the velocity FFT processing. Since a technique for measuring (estimating) a relative velocity to a predetermined object by performing velocity FFT processing on a result of distance FFT processing is known, more detailed description is appropriately simplified or omitted. Results (for example, velocity information) of the velocity FFT processing performed by the velocity FFT processing unit 12 may be supplied to the angle-of-arrival estimating unit 13. The results of the velocity FFT processing performed by the velocity FFT processing unit 12 may also be supplied to the object detecting unit 14.

The angle-of-arrival estimating unit 13 estimates a direction from which the reflected wave R arrives from the predetermined object 200 on the basis of the results of the velocity FFT processing performed by the velocity FFT processing unit 12. The electronic device 1 can estimate the direction from which the reflected wave R arrives by receiving the reflected wave R from the plurality of reception antennas 31. For example, the plurality of reception antennas 31 are arranged at a predetermined interval. In this case, the transmission wave T transmitted from each of the transmission antennas 25 is reflected off the predetermined object 200 to become the reflected wave R. Each of the plurality of reception antennas 31 arranged at the predetermined interval receives the reflected wave R. The angle-of-arrival estimating unit 13 can estimate the direction from which the reflected wave R arrives at each of the plurality of reception antennas 31 on the basis of the phase of the reflected wave R received by the reception antenna 31 and a difference in path of the reflected wave R. That is, the electronic device 1 can measure (estimate) the angle of arrival θ illustrated in Fig. 1 on the basis of the results of the velocity FFT processing.

Various techniques for estimating a direction from which the reflected wave R arrives on the basis of a result of velocity FFT processing have been proposed. For example, MUSIC (MUltiple SIgnal Classification), ESPRIT (Estimation of Signal Parameters via Rotational Invariance Technique), and the like are known as known arriving direction estimation algorithms. Thus, more detailed description of the known techniques is appropriately simplified or omitted. Information (angle information) of the angle of arrival θ estimated by the angle-of-arrival estimating unit 13 may be supplied to the object detecting unit 14.

The object detecting unit 14 detects an object located in a range in which the transmission wave T is transmitted, on the basis of the information supplied from at least any of the distance FFT processing unit 11, the velocity FFT processing unit 12, and the angle-of-arrival estimating unit 13. The object detecting unit 14 may perform detection of an object by performing, for example, clustering processing on the basis of the supplied distance information, velocity information, and angle information. For example, DBSCAN (Density-based spatial clustering of applications with noise) or the like is known as an algorithm used in clustering of data. In the clustering processing, for example, average power of points constituting the detected object may be calculated. The distance information, the velocity information, the angle information, and power information of the object detected by the object detecting unit 14 may be supplied to the detection range determining unit 15. The distance information, the velocity information, the angle information, and the power information of the object detected by the object detecting unit 14 may be supplied to the ECU 50. In this case, when the mobility device 100 is an automobile, communication may be performed using a communication interface such as a CAN (Controller Area Network), for example.

The detection range determining unit 15 determines a range (hereinafter, also referred to as an "object detection range") in which an object that reflects the transmission wave T is detected on the basis of the transmission signal and the reception signal. The detection range determining unit 15 may determine a plurality of object detection ranges on the basis of an operation performed by a driver or the like of the mobility device 100 equipped with the electronic device 1, for example. For example, the detection range determining unit 15 may determine a plurality of object detection ranges suitable for parking assist when a parking assist button is operated by a driver or the like of the mobility device 100. The detection range determining unit 15 may determine a plurality of object detection ranges on the basis of an instruction from the ECU 50, for example. For example, when the ECU 50 determines that the mobility device 100 is to travel backward, the detection range determining unit 15 may determine, on the basis of an instruction from the ECU 50, a plurality of object detection ranges suitable when the mobility device 100 travels backward. The detection range determining unit 15 may determine a plurality of object detection ranges on the basis of a change in an operation state of a steering wheel, an accelerator pedal, a transmission lever, or the like of the mobility device 100, for example. The detection range determining unit 15 may determine a plurality of object detection ranges on the basis of a result of detection of an object performed by the object detecting unit 14.

The parameter setting unit 16 sets various parameters that define a transmission signal and a reception signal with which an object that reflects the transmission wave T as the reflected wave R is to be detected. That is, the parameter setting unit 16 sets various parameters for transmitting the transmission wave T from each transmission antenna 25 and various parameters for receiving the reflected wave R from each reception antenna 31.

In particular, in the one embodiment, the parameter setting unit 16 may set various parameters related to transmission of the transmission wave T and reception of the reflected wave R in order to detect an object in the object detection range described above. For example, the parameter setting unit 16 may define a range or the like in which the reflected wave R is desirably received in order to detect the object in the object detection range by receiving the reflected wave R. For example, the parameter setting unit 16 may define a range or the like to which a beam of the transmission wave T is desirably directed in order to transmit the transmission wave T from each of the plurality of transmission antennas 25 and detect an object in the object detection range. The parameter setting unit 16 may also set various parameters for transmitting the transmission wave T and receiving the reflected wave R.

The various parameters set by the parameter setting unit 16 may be supplied to the signal generating unit 21. Thus, the signal generating unit 21 can generate the transmission signal to be transmitted as the transmission wave T on the basis of the various parameters set by the parameter setting unit 16. The various parameters set by the parameter setting unit 16 may be supplied to the object detecting unit 14. Thus, the object detecting unit 14 can perform object detection processing in the object detection range determined on the basis of the various parameters set by the parameter setting unit 16.

The ECU 50 included in the electronic device 1 according to the one embodiment is capable of controlling the functional units of the mobility device 100 and also controlling operations of the entire mobility device 100. To provide control and processing capabilities for executing various functions, the ECU 50 may include at least one processor, for example, a CPU (Central Processing Unit). The ECU 50 may be collectively implemented by one processor, may be implemented by some processors, or may be implemented discrete individual processors. The processor may be implemented as one IC. The IC is also referred to as an integrated circuit. The processor may be implemented as a plurality of ICs and discrete circuits connected to be able to perform communication. The processor may be implemented on the basis of various other known technologies. In the one embodiment, the ECU 50 may be configured as, for example, a CPU and a program executed by the CPU. The ECU 50 may appropriately include a memory required for operations of the ECU 50. At least part of the functions of the control unit 10 may be functions of the ECU 50, or at least part of the functions of the ECU 50 may be functions of the control unit 10.

The electronic device 1 illustrated in Fig. 2 includes the three transmission antennas 25 and the four reception antennas 31. However, the electronic device 1 according to the one embodiment may include any number of transmission antennas 25 and any number of reception antennas 31. For example, by including the two transmission antennas 25 and the four reception antennas 31, the electronic device 1 can be regarded to include a virtual antenna array that is virtually constituted by eight antennas. As described above, the electronic device 1 may receive the reflected wave R of 16 subframes illustrated in Fig. 3 by using, for example, the eight virtual antennas.

An operation of the electronic device 1 according to the one embodiment is described next.

A direction in which the electric field oscillates in an electromagnetic wave constituted by the electric field and the magnetic field is hereinafter referred to as a "polarization direction" with respect to the ground. A plane in which the electric field oscillates in the electromagnetic wave is referred to as a "plane of polarization". Among polarized waves, a radio wave for which the oscillation direction of the electric field is horizontal to the ground is referred to as a horizontally polarized wave, and a radio wave for which the oscillation direction of the electric field is vertical to the ground is referred to as a vertically polarized wave. A linearly polarized wave that propagates without any change in the plane of polarization is described below. In not claimed examples the present disclosure may also be applied to a circularly polarized wave and an elliptically polarized wave in addition to a linearly polarized wave.

When the transmission wave transmitted from the transmission antenna 25 of the electronic device 1 according to the one embodiment hits and is reflected off an object, the direction (polarization direction) of the plane of polarization of the radio wave of the reflected wave may change. This is because the directions of the electric field and the magnetic field rotate or the like when the transmission wave is reflected off the object. Such a change in the polarization direction may vary depending on various conditions such as the inclination, the shape, and/or the material of the reflecting surface of the object, for example. In general, the reflected wave obtained as a result of a radio wave transmitted as a horizontally polarized wave from a transmission antenna being reflected off an object does not entirely become a horizontally polarized wave. The reflected wave obtained as a result of the radio wave transmitted as a horizontally polarized wave being reflected off the object may include a vertically polarized wave.

An example of arrangement of transmission antennas and reception antennas of an electronic device is described as a comparative example to be compared with the electronic device according to the one embodiment.

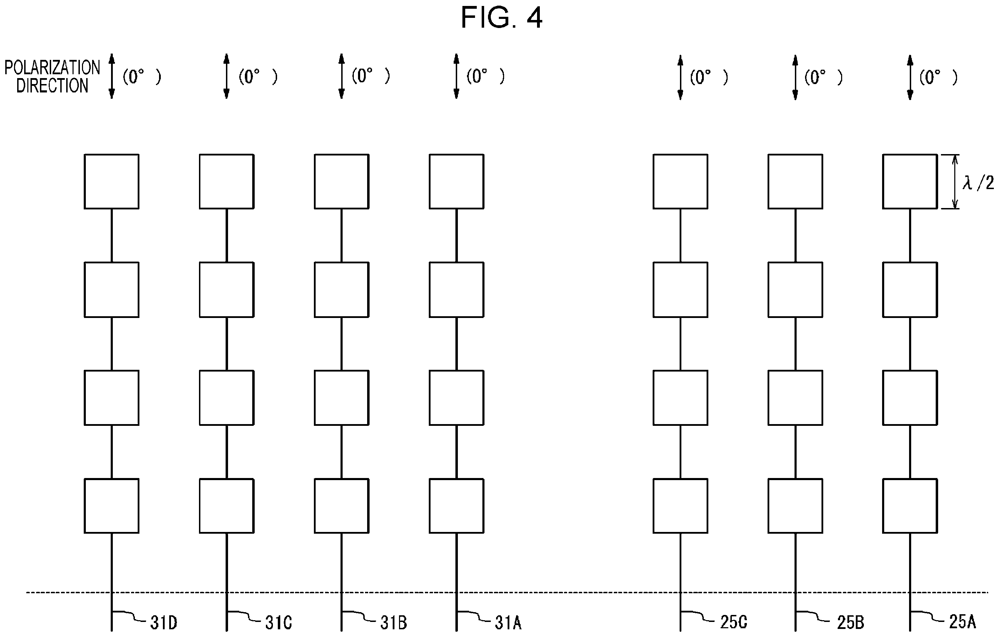

Fig. 4 is a diagram illustrating an example of arrangement of transmission antennas and reception antennas of an electronic device to be compared with the electronic device according to the one embodiment. Fig. 4 illustrates only the transmission antennas 25 and the reception antennas 31 among the members of the electronic device 1 illustrated in Fig. 2. The transmission antennas 25 and the reception antennas 31 according to the comparative example illustrated in Fig. 4 may be configured as, for example, a patch antenna (microstrip antenna).

As illustrated in Fig. 4, each of the transmission antennas 25 and the reception antennas 31 may include four conductors (radiating elements), each side of which has a length of λ/2 (where λ denotes the wavelength of the transmission wave), that are connected to each other by a microstrip line (feeder).

In the example illustrated in Fig. 4, the transmission antennas 25A, 25B, and 25C are included as the transmission antennas 25. In the example illustrated in Fig. 4, the reception antennas 31A, 31B, 31C, and 31D are included as the reception antennas 31. In Fig. 4, a direction of a dash line at the bottom indicates the horizontal direction.

All of the transmission antennas 25 and the reception antennas 31 illustrated in Fig. 4 are configured in the same manner. Thus, the polarization directions of transmission waves transmitted from the three transmission antennas 25 are the same direction. The polarization directions of reflected waves received from the four reception antennas 31 are the same direction. The polarization directions of the transmission antennas 25 and the reception antennas 31 are indicated by respective arrows at the top of Fig. 4. Angles with respect to the polarization directions of the transmission antennas 25 and the reception antennas 31 are illustrated at the top of Fig. 4. That is, all the polarization directions of the transmission antennas 25 and the reception antennas 31 illustrated in Fig. 4 are denoted as 0°. This angle may be set, for example, such that the angle is 0° when the polarization direction of the electric field is horizontal to the ground and changes with the counterclockwise direction being a positive direction.

In the configuration illustrated in Fig. 4, the polarization directions (0°) of the transmission waves transmitted from the three transmission antennas 25 and the polarization directions (0°) of the reflected waves received by the four reception antennas 31 are equal to each other. Thus, by receiving, with the reception antennas 31, radio waves that are obtained as a result of the transmission waves output from the transmission antennas 25 being reflected off an object and that are returning in the same polarization direction, detection of the object can be performed. Among the polarization directions of the reflected waves received by the reception antennas 31, the polarization direction in which the reception intensity of the reception antennas 31 is the highest is referred to as a most preferable polarization direction.

On the other hand, as described above, when the transmission waves transmitted from the transmission antennas 25 hit and are reflected off an object, the polarization directions of the reflected waves may change from the polarization directions of the transmission waves. Thus, the reflected waves obtained as a result of the radio waves transmitted as vertically polarized waves being reflected off the object may include a horizontally polarized wave.

For example, radio waves (the polarization direction of 0°) output from the transmission antennas 25 illustrated in Fig. 4 hit a detection target and are reflected off the detection target. The polarization directions of at least some of reflected waves obtained as a result of the transmission waves being reflected may change. In this case, the reception antennas 31 illustrated in Fig. 4 mainly receive a component of the polarization direction of 0° among the reflected waves. The reception antennas 31 also receive a component of the polarization direction of 90° among the reflected waves. However, since the reception level of the reflected waves of the component of the polarization direction of 90° is low, such a component is buried in noise components and consequently may not be detected.

In such a circumstance, when the object that reflects the transmission waves is located at a short distance or has a large reflection cross section, the reception power of the reflected waves received by the reception antennas 31 increases. Thus, in such a case, any particular inconvenience is unlikely to occur. However, when the object that reflects the transmission waves is located at a long distance or has a small reflection cross section, the reception power of the reflected waves received by the reception antennas 31 decreases depending on the change in the polarization direction. In such a case, a probability of the reception power being buried in noise increases, which leads to non-detection of the object.

As for a single object that reflects a transmission wave, the polarization direction of a reflected wave may expectedly vary depending on the portion of the object. For example, an object is assumed in which a change in the polarization direction is small at the center and is large around an end portion. In this case, the presence of the object can be detected by receiving the reflected wave. However, the end portion of the object may not be detected. In this case, there may be a risk that the width of the object is not accurately detected.

Accordingly, the electronic device 1 according to the one embodiment enables a reflecting object to be appropriately detected even if the polarization direction of the reflected wave changes. Such an electronic device 1 is described below.

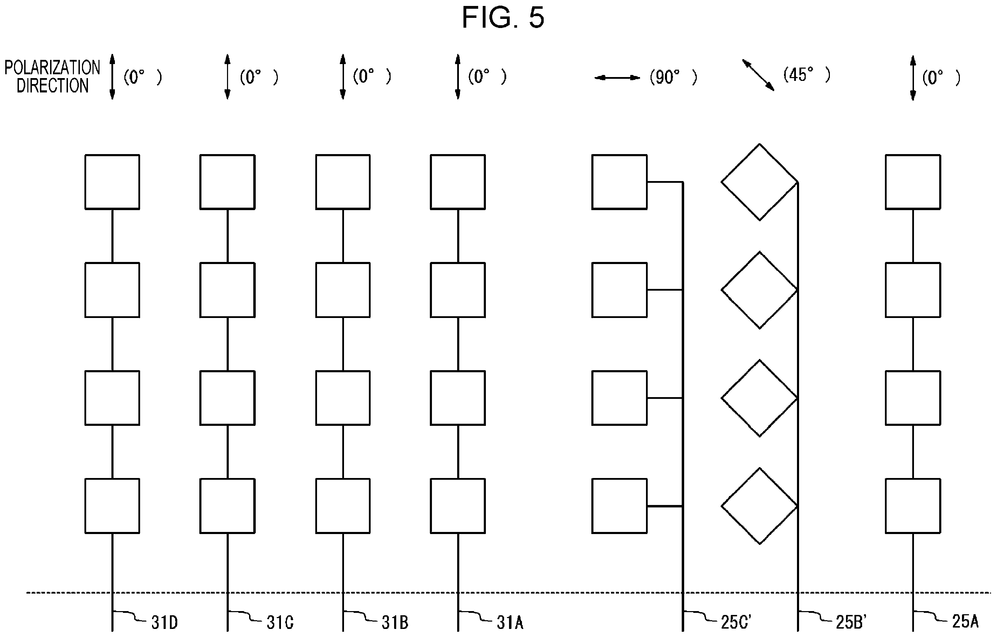

Fig. 5 is a diagram illustrating an example of arrangement of the transmission antennas and the reception antennas of the electronic device 1 according to the one embodiment. As in Fig. 4, Fig. 5 illustrates only the transmission antennas 25 and the reception antennas 31 among the members of the electronic device 1 illustrated in Fig. 2. Description of Fig. 5 that is the same as and/or similar to that of Fig. 4 is appropriately simplified or omitted.

The transmission antenna 25A illustrated in Fig. 5 may be the same as and/or similar to the transmission antenna 25A illustrated in Fig. **4****.** On the other hand, a transmission antenna 25B' illustrated in Fig. 5 is changed from the transmission antenna 25B illustrated in Fig. **4****. A** transmission antenna 25C' illustrated in Fig. 5 is also changed from the transmission antenna 25C illustrated in Fig. **4****.** The reception antennas 31 illustrated in Fig. 5 may be the same as and/or similar to the reception antennas 31 illustrated in Fig. 4.

The polarization direction of the transmission antenna 25B' illustrated in Fig. 5 is changed from that of the transmission antenna 25B illustrated in Fig. 4 by 45°. The polarization direction of the transmission antenna 25C' illustrated in Fig. 5 is changed from that of the transmission antenna 25C illustrated in Fig. 4 by 90°. The changes in the polarization direction of the transmission antennas 25B' and 25C' are not necessarily limited to 45° or 90°. The polarization directions of the transmission antennas 25B' and 25C' are set to be different from at least one of the transmission antenna 25A and the reception antennas 31.

A difference in the polarization direction between the most adjacent transmission antenna 25 and reception antenna 31, that is, between the transmission antenna 25C' and the reception antenna 31A, may be set to be large such as, for example, 90°. By setting the difference between the polarization direction of the transmission antenna 25 and the polarization direction of the adjacent reception antenna 31 to be large in this manner, isolation can be highly maintained even if the transmission antenna and the reception antenna are arranged closer to each other. Thus, such a configuration can reduce the size of the antennas.

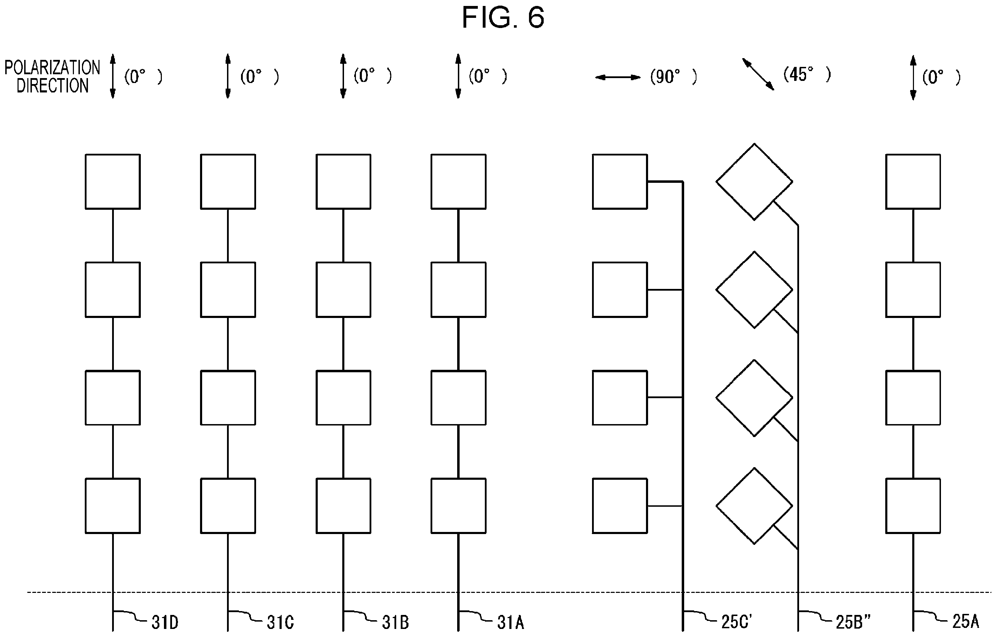

Fig. 6 is a diagram illustrating another example of the arrangement of the transmission antennas and the reception antennas of the electronic device 1 according to the one embodiment. As in Figs. 4 and 5, Fig. 6 also illustrates only the transmission antennas 25 and the reception antennas 31 among the members of the electronic device 1 illustrated in Fig. 2. Description of Fig. 6 that is the same as and/or similar to that of Fig. 4 and/or Fig. 5 is appropriately simplified or omitted. A transmission antenna 25B'' illustrated in Fig. 6 is changed from the transmission antenna 25B' illustrated in Fig. 5 in a configuration of a microstrip line. The configuration illustrated in Fig. 6 can also provide an effect that is the same as and/or similar to the effect provided by the configuration illustrated in Fig. 5.

As described above, the electronic device 1 according to the one embodiment includes the transmission antennas 25 that transmit respective transmission waves, the reception antennas 31 that receive respective reflected waves that are the reflected transmission waves, and the control unit 10. The control unit 10 detects an object that reflects the transmission waves, based on a transmission signal transmitted as the transmission waves and a reception signal received as the reflected waves.

In the electronic device 1 according to the one embodiment, the transmission antennas 25 include a first transmission antenna and a second transmission antenna. Specifically, the transmission antennas 25 include any two of the transmission antennas 25A, 25B', and 25C'. The first transmission antenna transmits a transmission wave of a first polarization direction. The second transmission antenna transmits a transmission wave of a second polarization direction different from the first polarization direction.

In the electronic device 1 according to the one embodiment, the reception antennas 31 include the plurality of reception antennas 31A to 31D that receive reflected waves of an identical polarization direction among the reflected waves that are the reflected transmission waves.

The electronic device 1 according to according to a claimed embodiment includes a third transmission antenna between the first transmission antenna and the second transmission antenna. Specifically, the electronic device 1 according to the one embodiment includes the transmission antenna 25B' between the transmission antenna 25A and the transmission antenna 25C'. The third transmission antenna transmits a transmission wave of a third polarization direction. An angle between the third polarization direction (45°) and the first polarization direction (for example, 0°) is smaller than an angle between the first polarization direction (for example, 0°) and the second polarization direction (for example, 90°). The plurality of transmission antennas 25 may be arranged such that the first polarization direction (for example, 0°) and the second polarization direction (for example, 90°) are orthogonal to each other.

In the electronic device 1 according to the one embodiment, the polarization direction of the transmission wave transmitted by the transmission antenna 25 that is closer to the reception antennas 31 among the plurality of transmission antennas 25 may be set to be different from the polarization direction of the reflected waves received by the reception antennas 31. For example, the polarization direction (for example, 90°) of the transmission wave transmitted by the transmission antenna 25 (that is, the transmission antenna 25C') that is closer to the reception antennas 31 among the plurality of transmission antennas 25A to 25C' may be set to be different from the polarization direction (for example, 0°) of the reflected waves received by the reception antennas 31.

In the electronic device 1 according to the one embodiment, the polarization direction of the transmission wave transmitted by the transmission antenna 25 that is farther from the reception antennas 31 among the plurality of transmission antennas 25 may be set to be identical to the polarization direction of the reflected waves received by the reception antennas 31. For example, the polarization direction (for example, 0°) of the transmission wave transmitted by the transmission antenna 25 (that is, the transmission antenna 25A) that is farther from the reception antennas 31 among the plurality of transmission antennas 25A to 25C' may be set to be identical to the polarization direction (for example, 0°) of the reflected waves received by the reception antennas 31.

An operation of transmitting a transmission wave by switching between the plurality of transmission antennas 25 in the electronic device 1 according to the one embodiment is described. The electronic device 1 according to the one embodiment transmits a transmission wave by switching between the plurality of transmission antennas 25 arranged in the above-described manner.

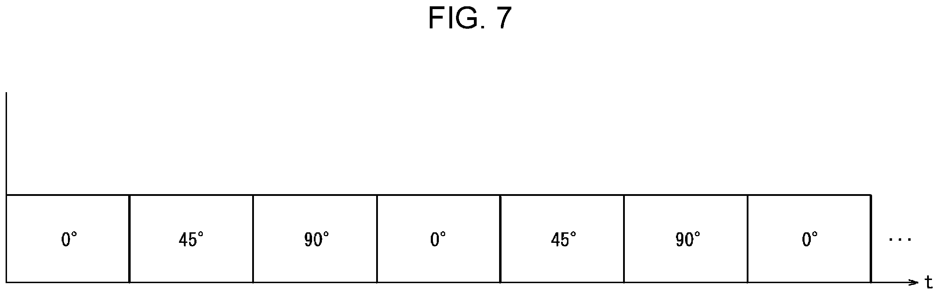

Fig. 7 is a diagram for describing switching of the transmission antennas in the electronic device 1 according to the one embodiment. In Fig. 7, the horizontal axis represents the elapsed time. Fig. 7 illustrates a state of transmitting a transmission wave by sequentially switching between the plurality of transmission antennas 25 having different polarization directions with an elapse of time (that is, in a time-division manner).

As illustrated in Fig. 7, the electronic device 1 according to the one embodiment may transmit a transmission wave from the transmission antenna 25 (for example, the transmission antenna 25A) of the polarization direction of 0° in the first time interval. The electronic device 1 according to the one embodiment may transmit a transmission wave from the transmission antenna 25 (for example, the transmission antenna 25B') of the polarization direction of 45° in the next time interval. The electronic device 1 according to the one embodiment may transmit a transmission wave from the transmission antenna 25 (for example, the transmission antenna 25C') of the polarization direction of 90° in the next time interval. The electronic device 1 according to the one embodiment may repeat the above-described switching of the transmission antennas 25 in the next time interval.

An operation in the case where the electronic device 1 according to the one embodiment detects an object located at a short distance or detects an object having a large reflection cross section is described as an example below.

For example, suppose that the transmission wave is transmitted from the transmission antenna 25A of the polarization direction of 0° in the first time interval illustrated in Fig. 7. In this case, the reception antennas 31 receive a component of the polarization direction of 0° among returning signals that have been reflected off the detection target. The reception antennas 31 also receive a component of the polarization direction of 90° but the reception level is so low. Thus, the component of the polarization direction of 90° is buried in noise components and is not to be detected.

Suppose that the transmission wave is transmitted from the transmission antenna 25B' of the polarization direction of 45° in the next time interval illustrated in Fig. 7. In this case, the reception antennas 31 receive a component of the polarization direction of 0° among returning signals that have been reflected off the detection target. The reception antennas 31 also receive a component of the polarization direction of 45° but the reception level is so low. Thus, the component of the polarization direction of 45° is buried in noise components and is not to be detected.

Suppose that the transmission wave is transmitted from the transmission antenna 25C' of the polarization direction of 90° in the next time interval illustrated in Fig. 7. In this case, the reception antennas 31 receive a component of the polarization direction of 0° among returning signals that have been reflected off the detection target. The reception antennas 31 also receive a component of the polarization direction of 90° but the reception level is so low. Thus, the component of the polarization direction of 90° is buried in noise components and is not to be detected. That is, in the present disclosure, by transmitting a radio wave according to the scheme illustrated in Fig. 7, a target having various reflected wave polarization characteristics can be appropriately detected. The reflected wave polarization characteristics are characteristics of how an incident wave is polarized and reflected as a reflected wave.

Switching of the transmission antennas illustrated in Fig. 7 is illustrative. In one embodiment, the transmission antennas may be switched in an order different from the switching order of the transmission antennas illustrated in Fig. 7. In one embodiment, the transmission antennas may be switched at random instead of regular repetition as in the switching of the transmission antennas illustrated in Fig. 7. The time intervals illustrated in Fig. 7 may have any time length. All the time intervals illustrated in Fig. 7 need not have the same time length.

As described above, the electronic device 1 according to the one embodiment may transmit a transmission wave by switching between the first transmission antenna and the second transmission antenna. In this case, the electronic device 1 according to the one embodiment may switch between the first transmission antenna and the second transmission antenna at a predetermined timing. Specifically, the electronic device 1 according to the one embodiment may transmit the transmission wave by switching between any two of the transmission antennas 25A, 25B', and 25C'.

The electronic device 1 according to the one embodiment may transmit the transmission wave by switching between the first transmission antenna, the second transmission antenna, and the third transmission antenna. In this case, the electronic device 1 according to the one embodiment may switch between the first transmission antenna, the second transmission antenna, and the third transmission antenna at predetermined timings. Specifically, the electronic device 1 according to the one embodiment may transmit the transmission wave by switching between the transmission antennas 25A, 25B', and 25C'.

An operation in the case where the electronic device 1 according to the one embodiment detects an object having a non-uniform reflection cross section is described as an example next.

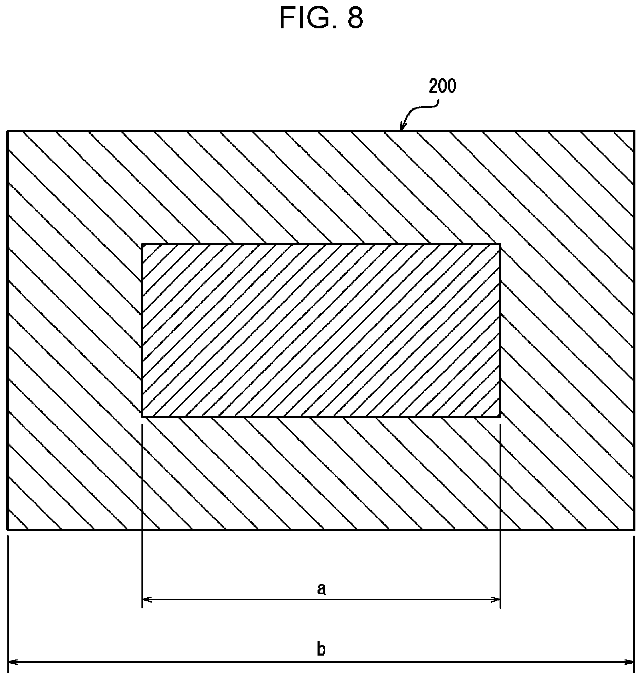

Fig. 8 is a diagram illustrating an object having a non-uniform reflection cross section. Suppose that the object 200 illustrated in Fig. 8 has a relatively large reflection cross section at a central portion thereof but has a relatively small reflection cross section at a peripheral portion thereof. That is, the central portion of the object 200 hardly changes the polarization direction when reflecting the transmission wave. For example, the transmission wave transmitted from the transmission antenna 25A of the polarization direction of 0° is reflected off the central portion of the object 200 such that the polarization direction is maintained substantially at 0°. In this case, the electronic device 1 determines, as the width of the object 200, a range "a" illustrated in Fig. 8 at a timing at which the transmission wave of the polarization direction of 0° is transmitted from the transmission antenna 25A.

On the other hand, suppose that the peripheral portion of the object 200 illustrated in Fig. 8 largely changes the polarization direction when reflecting the transmission wave. For example, the transmission wave transmitted from the transmission antenna 25A of the polarization direction of 0° is reflected off the peripheral portion of the object 200 such that the polarization direction is changed to 90°. In this case, the electronic device 1 determines, as the width of the object 200, a range "b" illustrated in Fig. 8 at a timing at which the transmission wave of the polarization direction of 90° is transmitted from the transmission antenna 25C'.

As described above, by transmitting a plurality of transmission waves having different polarization directions, the electronic device 1 according to the one embodiment can combine the reception results of reflected waves of the transmission waves. By transmitting a plurality of transmission waves having different polarization directions, even if the polarization directions of reflected waves largely change, the electronic device 1 according to the one embodiment can be more likely to receive such reflected waves. The electronic device 1 according to the one embodiment is also effective in detection of an object that is intended to largely change the plane of polarization such as a stealth object, for example. The electronic device 1 according to the one embodiment can complement a range not to be detected with a transmission wave of a single polarization direction. Thus, the electronic device 1 according to the one embodiment can operate to have diversity of the plane of polarization. The electronic device 1 according to the one embodiment can reduce the range not to be detected.

A specific example of a procedure of the operation of the electronic device 1 according to the one embodiment is described next.

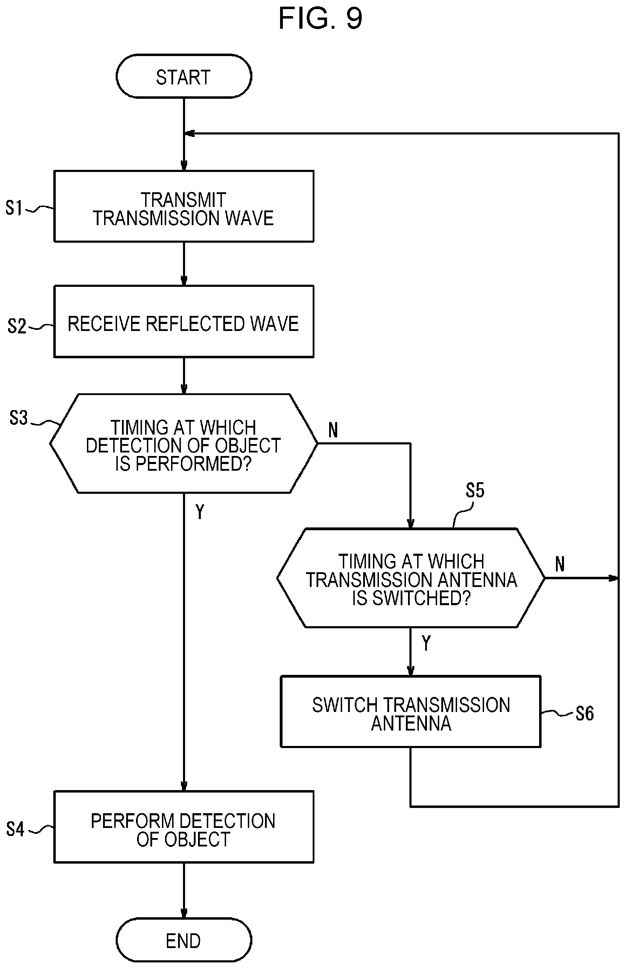

Fig. 9 is a flowchart for describing the operation of the electronic device 1 according to the one embodiment. The operation illustrated in Fig. 9 may start when the electronic device 1 according to the one embodiment detects an object located around the electronic device 1 (or the sensor 5).

In response to the start of the operation illustrated Fig. 9, the control unit 10 of the electronic device 1 performs control so that a transmission wave is transmitted from the transmission antenna 25 (step S1). It is assumed that the switching order of the plurality of transmission antennas 25 that transmit transmission waves having different polarization directions in step S1 is previously determined. For example, the transmission antenna 25 that transmits the transmission wave first may be the transmission antenna 25A (the polarization direction of 0°).

After the transmission wave is transmitted in step S1, the control unit 10 performs control so that the reflected wave R is received from the reception antennas 31 (step S2).

After the reception wave is received in step S2, the control unit 10 determines whether a timing at which the electronic device 1 performs detection of an object has come (step S3). The timing at which the electronic device 1 performs detection of an object in step S3 may be appropriately set depending on the required resolution or the like of the electronic device 1.

If it is determined in step S3 that it is the timing at which the electronic device 1 performs detection of an object, the control unit 10 detects an object located around the electronic device 1 (or the sensor 5) (step S4). In step S4, the object detecting unit 14 of the control unit 10 may detect the presence of an object on the basis of an estimation result obtained by at least any of the distance FFT processing unit 11, the velocity FFT processing unit 12, and the angle-of-arrival estimating unit 13.

In the electronic device 1 according to the one embodiment, the object detecting unit 14 of the control unit 10 may perform, for example, object detection (for example, clustering) processing from angle information, velocity information, and distance information obtained for each of the plurality of transmission antennas 25 that transmit transmission waves of different polarization directions, for example. The object detecting unit 14 may calculate average power of points constituting the object from the angle information, the velocity information, and the distance information obtained for each of the plurality of transmission antennas 25 that transmit transmission waves of different polarization directions, for example. In the electronic device 1 according to the one embodiment, the object detecting unit 14 may notify an upper-level control CPU such as the ECU 50, for example, of object detection information or point cloud information obtained for each of the plurality of transmission antennas 25.

Since detection of an object in step S4 can be performed on the basis of various algorithms or the like by using a known technology of a millimeter wave radar, more detailed description is omitted. After step S4 illustrated in Fig. 9, the control unit 10 may start the processing of step S1 again. As described above, in the electronic device 1 according to the one embodiment, the control unit 10 may detect an object that reflects the transmission wave on the basis of the transmission signal transmitted as the transmission wave and the reception signal received as the reflected wave.

On the other hand, it is determined in step S3 that it is not the timing at which detection of an object is performed, the control unit 10 determines whether it is a timing at which the transmission antenna 25 that transmits the transmission wave is switched (step S5). The timing at which the transmission antenna 25 is switched in step S5 may be the timing corresponding to the end of each time interval described in Fig. 7.

If it is determined in step S5 that it is not the timing at which the transmission antenna 25 is switched, the process returns to step S1 and the control unit 10 continues the process. That is, in this case, the process is continued without switching the transmission antenna 25.

On the other hand, if it is determined in step S5 that it is the timing at which the transmission antenna 25 is switched, the control unit 10 switches the transmission antenna 25 that transmits the transmission wave (step S6). For example, if the transmission antenna 25 that has transmitted the transmission wave first is the transmission antenna 25A (the polarization direction of 0°), the transmission antenna 25 to which the transmission antenna 25A is switched in step S6 may be, for example, the transmission antenna 25B' (the polarization direction of 45°). If the transmission antenna 25 that has transmitted the transmission wave is the transmission antenna 25B' (the polarization direction of 45°), the transmission antenna 25 to which the transmission antenna 25B' is switched in step S6 may be, for example, the transmission antenna 25C' (the polarization direction of 90°). If the transmission antenna 25 that has transmitted the transmission wave is the transmission antenna 25C' (the polarization direction of 90°), the transmission antenna 25 to which the transmission antenna 25C' is switched in step S6 may be, for example, the transmission antenna 25A (the polarization direction of 0°).

After the transmission antenna 25 is switched in step S6, the process returns to step S1 and the process is continued. That is, in this case, the process is continued after the transmission antenna 25 is switched.

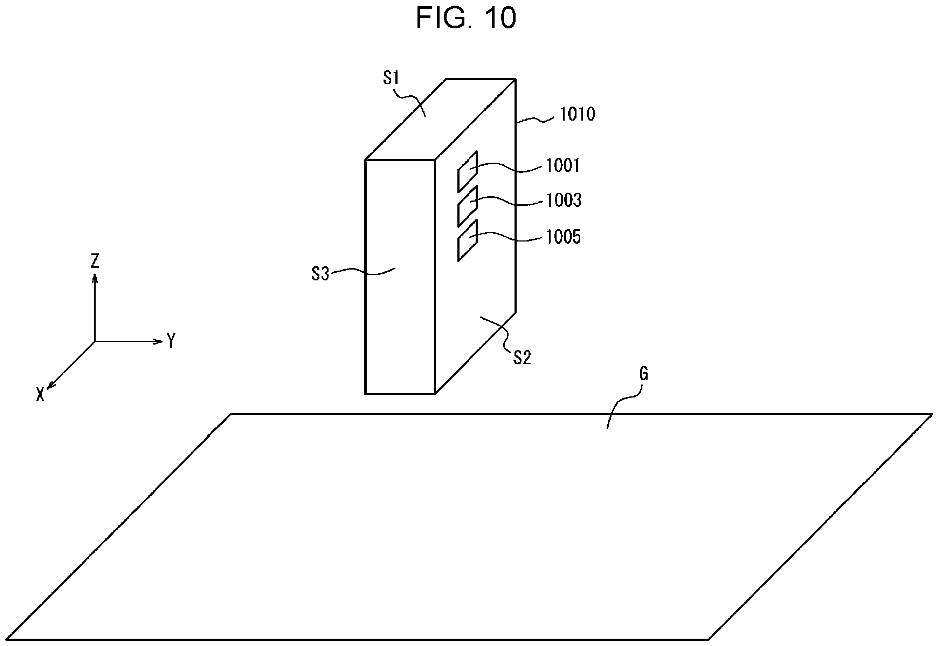

Spatial arrangement of the antennas of the electronic device 1 according to the one embodiment is now described with reference to Fig. 10. Fig. 10 is a conceptual diagram for describing an example of spatial arrangement of the antennas of the electronic device 1 according to the one embodiment.

In Fig. 10, three antennas 1001, 1003, and 1005 are arranged on a surface S2 of an antenna substrate 1010. These antennas 1001, 1003, and 1005 may be any of the transmission antennas and the reception antennas. In the present disclosure, the number of antennas arranged on the antenna substrate 1010 may be any number other than three.

The antenna substrate 1010 is a rectangular parallelepiped having three surfaces S1, S2, and S3. In the present disclosure, the antenna substrate 1010 may have any shape other than a rectangular parallelepiped.

As illustrated in Fig. 10, a plane parallel to a surface of ground G is denoted as an XY plane. A direction perpendicular to the XY plane is denoted as a Z axis. The surface S1 of the antenna substrate 1010 is parallel to the XY plane. The surface S2 of the antenna substrate 1010 is parallel to an XZ plane. The surface S3 of the antenna substrate 1010 is parallel to a YZ plane.

It is assumed that the mobility device 100 equipped with the antenna substrate 1010 travels in the Y-axis direction. In the present disclosure, it may be assumed that the mobility device 100 may travel in a direction other than the Y-axis direction.

The three antennas 1001, 1003, and 1005 arranged on the surface S2 of the antenna substrate 1010 are arranged side by side in the Z-axis direction. In the present disclosure, the three antennas 1001, 1003, and 1005 may be arranged in a direction other than the Z-axis direction.

The embodiments described above are not limited only to implementation as the electronic device 1. For example, the embodiments described above may be implemented as a method for controlling a device such as the electronic device 1. For example, the embodiments described above may be implemented as a program for controlling a device such as the electronic device 1.

The electronic device 1 according to one embodiment may include, as the minimum configuration, at least part of at least one of the sensor 5 and the control unit 10, for example. On the other hand, the electronic device 1 according to one embodiment may appropriately include at least any of the signal generating unit 21, the synthesizer 22, the phase control units 23, the amplifiers 24, and the transmission antennas 25 illustrated in Fig. 2 in addition to the control unit 10. The electronic device 1 according to the one embodiment may appropriately include at least any of the reception antennas 31, the LNAs 32, the mixers 33, the IF units 34, and the AD conversion units 35 instead of or along with the functional units described above. The electronic device 1 according to the one embodiment may further include the storage unit 40. As described above, the electronic device 1 according to the one embodiment can employ various configurations. When the electronic device 1 according to the one embodiment is mounted in the mobility device 100, for example, at least any of the functional units described above may be installed at an appropriate place such as the inside of the mobility device 100. On the other hand, in one embodiment, for example, at least any of the transmission antennas 25 and the reception antennas 31 may be installed outside the mobility device 100.

### Reference Signs List

- 1: electronic device
- 5: sensor
- 10: control unit
- 11: distance FFT processing unit
- 12: velocity FFT processing unit
- 13: angle-of-arrival estimating unit
- 14: object detecting unit
- 15: detection range determining unit
- 16: parameter setting unit
- 20: transmission unit
- 21: signal generating unit
- 22: synthesizer
- 23: phase control unit
- 24: amplifier
- 25: transmission antenna
- 30: reception unit
- 31: reception antenna
- 32: LNA
- 33: mixer
- 34: IF unit
- 35: AD conversion unit
- 40: storage unit
- 50: ECU
- 100: mobility device
- 200: object

## Claims

1. An electronic device (1) comprising:
a transmission antenna (25) that transmits a transmission wave (T);
a reception antenna (31) that receives a reflected wave (R) that is the reflected transmission wave (T); and
a control unit (10) that detects an object (200) that reflects the transmission wave (T), based on a transmission signal transmitted as the transmission wave (T) and a reception signal received as the reflected wave (R),
wherein
the transmission antenna (25) comprises a first transmission antenna (25A) that transmits a transmission wave (T) of a first polarization direction, and a second transmission antenna (25C') that transmits a transmission wave (T) of a second polarization direction different from the first polarization direction, wherein
the reception antenna (31) comprises a plurality of reception antennas (31A, 31B, 31C, 31D) that receive reflected waves (R) of an identical polarization direction in the reflected wave (R), each of the reception antennas (31A, 31B, 31C, 31D) being included in a respective one of reception units (30), wherein
the electronic device (1) further comprises a third transmission antenna (25B', 25B''), between the first transmission antenna (25A) and the second transmission antenna (25C'), that transmits a transmission wave (T) of a third polarization direction different from the first and second polarization directions, and wherein
an angle between the third polarization direction and the first polarization direction is smaller than an angle between the first polarization direction and the second polarization direction.

2. The electronic device (1) according to Claim 1,
wherein the first transmission antenna (25A) and the second transmission antenna (25C') are switched to transmit the transmission wave (T).

3. The electronic device (1) according to Claim 2,
wherein the first transmission antenna (25A) and the second transmission antenna (25C') are switched at a predetermined timing.

4. The electronic device (1) according to any of Claims 1 to 3, wherein a polarization direction of a transmission wave (T) transmitted by a transmission antenna (25) that is closer to the reception antenna (31) among the first transmission antenna (25A) and the second transmission antenna (25C') is different from a most preferable polarization direction of the reflected wave (R) received by the reception antenna (31).

5. The electronic device (1) according to Claim 4,
wherein a polarization direction of a transmission wave (T) transmitted by a transmission antenna (25) that is farther from the reception antenna (31) among the first transmission antenna (25A) and the second transmission antenna (25C') is identical to the most preferable polarization direction of the reflected wave (R) received by the reception antenna (31).

6. The electronic device (1) according to Claim 4 or 5,
wherein the first polarization direction is orthogonal to the second polarization direction.

7. A method for controlling an electronic device (1), comprising:
a step of transmitting a transmission wave (T) of a first polarization direction from a first transmission antenna (25A);
a step of transmitting a transmission wave (T) of a second polarization direction different from the first polarization direction from a second transmission antenna (25C');
a step of transmitting a transmission wave (T) of a third polarization direction different from the first and second polarization directions from a third transmission antenna (25B', 25B'') between the first and second transmission antennas (25A, 25C'), wherein an angle between the third polarization direction and the first polarization direction is smaller than an angle between the first polarization direction and the second polarization direction;
a step of receiving, from a plurality of reception antennas (31, 31A, 31B, 31C, 31D) each of which is included in a respective one of reception units (30), reflected waves (R) of an identical polarization direction in a reflected wave that is the reflected transmission wave (T); and
a step of detecting an object (200) that reflects the transmission wave (T), based on a transmission signal transmitted as the transmission wave (T) and a reception signal received as the reflected wave (R).

8. A program for controlling an electronic device (1) according to any of Claims 1 to 6, the program causing the electronic device (1) to perform:
a step of transmitting a transmission wave (T) of a first polarization direction from a first transmission antenna (25A);
a step of transmitting a transmission wave (T) of a second polarization direction different from the first polarization direction from a second transmission antenna (25C');
a step of transmitting a transmission wave (T) of a third polarization direction different from the first and second polarization directions from a third transmission antenna (25B', 25B'') between the first and second transmission antennas (25A, 25C'), wherein an angle between the third polarization direction and the first polarization direction is smaller than an angle between the first polarization direction and the second polarization direction;
a step of receiving, from a plurality of reception antennas (31, 31A, 31B, 31C, 31D) each of which is included in a respective one of reception units (30), reflected waves (R) of an identical polarization direction in a reflected wave that is the reflected transmission wave (T); and
a step of detecting an object (200) that reflects the transmission wave (T), based on a transmission signal transmitted as the transmission wave (T) and a reception signal received as the reflected wave (R).

## Patentansprüche

1. Elektronische Vorrichtung (1), aufweisend:
eine Sendeantenne (25), die eine Sendewelle (T) sendet,
eine Empfangsantenne (31), die eine reflektierte Welle (R) empfängt, die die reflektierte Sendewelle (T) ist, und
eine Steuereinheit (10), die ein Objekt (200) detektiert, das die Sendewelle (T) reflektiert, basierend auf einem als die Sendewelle (T) gesendeten Sendesignal und einem als die reflektierte Welle (R) empfangenen Empfangssignal, wobei
die Sendeantenne (25) aufweist: eine erste Sendeantenne (25A), die eine Sendewelle (T) einer ersten Polarisationsrichtung sendet, und eine zweite Sendeantenne (25C'), die eine Sendewelle (T) einer zweiten Polarisationsrichtung sendet, die von der ersten Polarisationsrichtung verschieden ist, wobei
die Empfangsantenne (31) eine Mehrzahl von Empfangsantennen (31A, 31B, 31C, 31D) aufweist, die reflektierte Wellen (R) mit einer identischen Polarisationsrichtung in der reflektierten Welle (R) empfangen, wobei jede der Empfangsantennen (31A, 31B, 31C, 31D) in einer jeweiligen von Empfangseinheiten (30) enthalten ist, wobei
die elektronische Vorrichtung (1) ferner eine dritte Sendeantenne (25B', 25B'') aufweist, zwischen der ersten Sendeantenne (25A) und der zweiten Sendeantenne (25C'), die eine Sendewelle (T) mit einer dritten Polarisationsrichtung sendet, die von der ersten und der zweiten Polarisationsrichtung verschieden ist, und wobei
ein Winkel zwischen der dritten Polarisationsrichtung und der ersten Polarisationsrichtung kleiner als ein Winkel zwischen der ersten Polarisationsrichtung und der zweiten Polarisationsrichtung ist.

2. Elektronische Vorrichtung (1) gemäß Anspruch 1, wobei die erste Sendeantenne (25A) und die zweite Sendeantenne (25C') zum Senden der Sendewelle (T) umgeschaltet werden.

3. Elektronische Vorrichtung (1) gemäß Anspruch 2, wobei die erste Sendeantenne (25A) und die zweite Sendeantenne (25C') zu einem vorbestimmten Zeitpunkt umgeschaltet werden.

4. Elektronische Vorrichtung (1) gemäß irgendeinem der Ansprüche 1 bis 3, wobei eine Polarisationsrichtung einer Sendewelle (T), die von einer Sendeantenne (25) gesendet wird, die von der ersten Sendeantenne (25A) und der zweiten Sendeantenne (25C') näher an der Empfangsantenne (31) liegt, von einer am meisten bevorzugten Polarisationsrichtung der von der Empfangsantenne (31) empfangenen reflektierten Welle (R) verschieden ist.

5. Elektronische Vorrichtung (1) gemäß Anspruch 4, wobei eine Polarisationsrichtung einer Sendewelle (T), die von einer Sendeantenne (25) gesendet wird, die von der ersten Sendeantenne (25A) und der zweiten Sendeantenne (25C') weiter von der Empfangsantenne (31) entfernt ist, mit der am meisten bevorzugten Polarisationsrichtung der von der Empfangsantenne (31) empfangenen reflektierten Welle (R) identisch ist.

6. Elektronische Vorrichtung (1) gemäß Anspruch 4 oder 5, wobei die erste Polarisationsrichtung orthogonal zur zweiten Polarisationsrichtung ist.

7. Verfahren zum Steuern einer elektronischen Vorrichtung (1), aufweisend:
einen Schritt des Sendens einer Sendewelle (T) mit einer ersten Polarisationsrichtung von einer ersten Sendeantenne (25A),
einen Schritt des Sendens einer Sendewelle (T) mit einer zweiten Polarisationsrichtung, die von der ersten Polarisationsrichtung verschieden ist, von einer zweiten Sendeantenne (25C'),
einen Schritt des Sendens einer Sendewelle (T) mit einer dritten Polarisationsrichtung, die von der ersten und der zweiten Polarisationsrichtung verschieden ist, von einer dritten Sendeantenne (25B', 25B'') zwischen der ersten und der zweiten Sendeantenne (25A, 25C'), wobei ein Winkel zwischen der dritten Polarisationsrichtung und der ersten Polarisationsrichtung kleiner als ein Winkel zwischen der ersten Polarisationsrichtung und der zweiten Polarisationsrichtung ist,
einen Schritt des Empfangens von reflektierten Wellen (R) mit einer identischen Polarisationsrichtung in einer reflektierten Welle, die die reflektierte Sendewelle (T) ist, von einer Mehrzahl von Empfangsantennen (31, 31A, 31B, 31C, 31D), von denen jede in einer jeweiligen von Empfangseinheiten (30) enthalten ist, und
einen Schritt des Detektierens eines Objekts (200), das die Sendewelle (T) reflektiert, basierend auf einem als die Sendewelle (T) gesendeten Sendesignal und einem als die reflektierte Welle (R) empfangenen Empfangssignal.

8. Programm zum Steuern einer elektronischen Vorrichtung (1) gemäß irgendeinem der Ansprüche 1 bis 6, wobei das Programm die elektronische Vorrichtung (1) veranlasst, auszuführen:
einen Schritt des Sendens einer Sendewelle (T) mit einer ersten Polarisationsrichtung von einer ersten Sendeantenne (25A) aus,
einen Schritt des Sendens einer Sendewelle (T) mit einer zweiten Polarisationsrichtung, die von der ersten Polarisationsrichtung verschieden ist, von einer zweiten Sendeantenne (25C') aus,
einen Schritt des Sendens einer Sendewelle (T) mit einer dritten Polarisationsrichtung, die von der ersten und der zweiten Polarisationsrichtung verschieden ist, von einer dritten Sendeantenne (25B', 25B'') zwischen der ersten und der zweiten Sendeantenne (25A, 25C'), wobei ein Winkel zwischen der dritten Polarisationsrichtung und der ersten Polarisationsrichtung kleiner als ein Winkel zwischen der ersten Polarisationsrichtung und der zweiten Polarisationsrichtung ist,
einen Schritt des Empfangens von reflektierten Wellen (R) mit einer identischen Polarisationsrichtung in einer reflektierten Welle, die die reflektierte Sendewelle (T) ist, von einer Mehrzahl von Empfangsantennen (31, 31A, 31B, 31C, 31D), von denen jede in einer jeweiligen von Empfangseinheiten (30) enthalten ist, und
einen Schritt des Detektierens eines Objekts (200), das die Sendewelle (T) reflektiert, basierend auf einem als die Sendewelle (T) gesendeten Sendesignal und einem als die reflektierte Welle (R) empfangenen Empfangssignal.

## Revendications

1. Dispositif électronique (1), comprenant :
une antenne de transmission (25) qui transmet une onde de transmission (T) ;
une antenne de réception (31) qui reçoit une onde réfléchie (R) qui est l'onde de transmission (T) réfléchie ; et
une unité de commande (10) qui détecte un objet (200) qui réfléchit l'onde de transmission (T), sur la base d'un signal de transmission transmis en tant que l'onde de transmission (T) et d'un signal de réception reçu en tant que l'onde réfléchie (R), dans lequel
l'antenne de transmission (25) comprend une première antenne de transmission (25A) qui transmet une onde de transmission (T) d'une première direction de polarisation, et une deuxième antenne de transmission (25C') qui transmet une onde de transmission (T) d'une deuxième direction de polarisation différente de la première direction de polarisation, dans lequel
l'antenne de réception (31) comprend une pluralité d'antennes de réception (31A, 31B, 31C, 31D) qui reçoivent des ondes réfléchies (R) d'une direction de polarisation identique au sein de l'onde réfléchie (R), chacune des antennes de réception (31A, 31B, 31C, 31D) étant inclus dans une respective des unités de réception (30), dans lequel
le dispositif électronique (1) comprend en outre une troisième antenne de transmission (25B', 25B'') entre la première antenne de transmission (25A) et la deuxième antenne de transmission (25C'), qui transmet une onde de transmission (T) d'une troisième direction de polarisation différente des première et deuxième directions de polarisation, et dans lequel
un angle entre la troisième direction de polarisation et la première direction de polarisation est inférieur à un angle entre la première direction de polarisation et la deuxième direction de polarisation.

2. Dispositif électronique (1) selon la revendication 1, dans lequel la première antenne de transmission (25A) et la deuxième antenne de transmission (25C') sont commutées pour transmettre l'onde de transmission (T).

3. Dispositif électronique (1) selon la revendication 2, dans lequel la première antenne de transmission (25A) et la deuxième antenne de transmission (25C') sont commutées à un moment prédéterminé.

4. Dispositif électronique (1) selon l'une quelconque des revendications 1 à 3, dans lequel une direction de polarisation d'une onde de transmission (T) transmise par une antenne de transmission (25) qui est plus proche de l'antenne de réception (31) parmi la première antenne de transmission (25A) et la deuxième antenne de transmission (25C') est différente d'une direction de polarisation la plus préférable de l'onde réfléchie (R) reçue par l'antenne de réception (31).

5. Dispositif électronique (1) selon la revendication 4, dans lequel une direction de polarisation d'une onde de transmission (T) transmise par une antenne de transmission (25) qui est plus éloignée de l'antenne de réception (31) parmi la première antenne de transmission (25A) et la deuxième antenne de transmission (25C') est identique à la direction de polarisation la plus préférable de l'onde réfléchie (R) reçue par l'antenne de réception (31).

6. Dispositif électronique (1) selon la revendication 4 ou 5, dans lequel la première direction de polarisation est orthogonale à la deuxième direction de polarisation.

7. Procédé de commande d'un dispositif électronique (1), comprenant :
une étape consistant à transmettre une onde de transmission (T) d'une première direction de polarisation à partir d'une première antenne de transmission (25A) ;
une étape consistant à transmettre une onde de transmission (T) d'une deuxième direction de polarisation différente de la première direction de polarisation à partir d'une deuxième antenne de transmission (25C') ;
une étape consistant à transmettre une onde de transmission (T) d'une troisième direction de polarisation, différente des première et deuxième directions de polarisation, à partir d'une troisième antenne de transmission (25B', 25B'') entre les première et deuxième antennes de transmission (25A, 25C'), dans lequel un angle entre la troisième direction de polarisation et la première direction de polarisation est inférieur à un angle entre la première direction de polarisation et la deuxième direction de polarisation ;
une étape consistant à recevoir, à partir d'une pluralité d'antennes de réception (31, 31A, 31B, 31C, 31D) dont chacune est incluse dans une respective d'unités de réception (30), des ondes réfléchies (R) d'une direction de polarisation identique au sein d'une onde réfléchie qui est l'onde de transmission réfléchie (T) ; et
une étape consistant à détecter un objet (200) qui réfléchit l'onde de transmission (T), sur la base d'un signal de transmission transmis en tant qu'onde de transmission (T) et d'un signal de réception reçu en tant qu'onde réfléchie (R).

8. Programme destiné à commander un dispositif électronique (1) selon l'une quelconque des revendications 1 à 6, le programme amenant le dispositif électronique (1) à exécuter :
une étape consistant à transmettre une onde de transmission (T) d'une première direction de polarisation à partir d'une première antenne de transmission (25A) ;
une étape consistant à transmettre une onde de transmission (T) d'une deuxième direction de polarisation différente de la première direction de polarisation à partir d'une deuxième antenne de transmission (25C') ;
une étape consistant à transmettre une onde de transmission (T) d'une troisième direction de polarisation, différente des première et deuxième directions de polarisation, à partir d'une troisième antenne de transmission (25B', 25B'') entre les première et deuxième antennes de transmission (25A, 25C'), dans lequel un angle entre la troisième direction de polarisation et la première direction de polarisation est inférieur à un angle entre la première direction de polarisation et la deuxième direction de polarisation ;
une étape consistant à recevoir, à partir d'une pluralité d'antennes de réception (31, 31A, 31B, 31C, 31D) dont chacune est incluse dans une respective d'unités de réception (30), des ondes réfléchies (R) d'une direction de polarisation identique dans une onde réfléchie qui est l'onde de transmission réfléchie (T) ; et
une étape consistant à détecter un objet (200) qui réfléchit l'onde de transmission (T), sur la base d'un signal de transmission transmis en tant qu'onde de transmission (T) et d'un signal de réception reçu en tant qu'onde réfléchie (R).
